# EUROPÄISCHE PATENTSCHRIFT

(11) **EP 1 452 444 B1**
(45) Veröffentlichungstag und Bekanntmachung des Hinweises auf die Patenterteilung: **03.10.2007**
(21) Anmeldenummer: 04002967.0
(22) Anmeldetag: 11.02.2004
(51) Int. Cl.: B64D 11/06

(54) **Sitzreihenanordnung in einer Passagierkabine eines Verkehrsflugzeuges**
Seat row arrangement in a passenger aircraft cabin
Disposition d'une rangée de sièges dans une cabine d'aéronef

(30) Priorität: 25.02.2003 DE 10307870
(43) Veröffentlichungstag der Anmeldung: 01.09.2004
(73) Patentinhaber: Airbus Deutschland GmbH, 21129 Hamburg (DE)
(72) Erfinder: Hiesener, Stefan, Dr., 31170 Tournefeville (FR)
(74) Vertreter: Hansmann, Dierk

(56) Entgegenhaltungen:
- EP-A- 0 788 970
- US-A- 761 823
- US-A- 3 762 766
- US-A- 4 157 797
- US-A- 5 335 963

## Beschreibung

Die Erfindung betrifft eine Passagierkabine eines Verkehrsflugzeuges mit einer Sitzreihenanordnung mit hintereinander angeordneten Sitzreihen, wobei die Sitzreihen mit vorbestimmten Sitzabständen angeordnet sind.

Üblicherweise sind in derzeitigen Verkehrsflugzeugen Sitzreihenanordnungen vorgesehen, die entsprechend der Klasseneinteilung in First Class, Business Class oder Tourist Class mit unterschiedlichen Sitzen und Sitzabständen ausgestattet sind. Die Sitzabstände in der entsprechenden Klasse sind üblicherweise ein wesentliches Kriterium für die in einem Flugzeug transportierbare Passagieranzahl. Mit geringeren Sitzabständen kann die maximal mögliche Anzahl von Sitzplätzen erhöht werden. Demgegenüber ist es für den Zugang zu den Notausgängen oder anderen Ausgängen im Verkehrsflugzeug vorgeschrieben, einen relativ weiten Abstand zwischen Sitzreihen vorzusehen und somit einen Quergang (bezogen auf die Flugzeuglängsrichtung) zu den Notausgängen zu bilden. Die minimale Breite dieser Zugänge zu den Notausgängen haengt vom Typ, der Geometrie und der Leistung der Notausgänge ab. Bei doppelten Ausgängen beträgt die Breite beispielsweise 36 Zoll, bei einfachen Notausgängen beispielsweise 20 Zoll. Eine ausreichende Breite eines Querganges ist unbedingt erforderlich, um im Falle einer Notevakuierung einen schnellen Passagierstrom der Passagiere zum Notausgang zu ermöglichen. Eine Notevakuierung eines Flugzeuges ist in maximal 90 s durchzuführen. Zu enge Quergänge erschweren das Erkennen des Zugangs zwischen den Sitzreihen und den Zugang selbst zu den Notausgängen. Gerade im Falle einer Notevakuierung müssen die Passagiere mit ausreichend Platz und ohne Hindernisse schnell zu den Notausgängen gelangen können.

In US 5,335, 963 ist eine Passagier-Flugbegleiter-Sitzreihe mit wenigstens einem Passagiersitz und einem Flugbegleitersitz offenbart. Wenigstens ein Adapter befindet sich im Bereich des Flugbegleitersitzes und kann mit einer Kupplung im Bereich des Passagiersitzes versbunden werden. Der Flugbegleitersitz umfasst einen Rahmen, einen Adapter, eine mit dem Rahmen verbundene Rückenlehne und einen bezüglich der Rückenlehne schwenkbaren Sitzbereich.

Bei einer Sitzgruppe, insbesondere in einer Passagierkabine eines Flugzeugs, mit einem Traggestell, das mehrere Sitze trägt, die jeweils aus Sitzteil und Rückenlehne bestehen, und die Sitze über mindestens eine gemeinsame Führungsschiene querverschieblich sind, wird in EP 0 788 970 A2 vorgeschlagen, eine Koppeleinrichtung an mindestens einem Sitzteil vorzusehen, die mittels einer Relativbewegung eines sitzspezifischen Bauteils betätigbar ist und mit einem einem an dem Sitzteil angeordneten Führungselement in Wirkverbindung steht, wobei bei Betätigung der Koppeleinrichtung das Führungselement mit dem zugeordneten Sitz auf der korrespondierenden Führungsschiene bewegbar ist. In EP 0 788 970 A2 sind zudem klappbare Sitze vorgesehen.

Klappbare Passagiersitze für Flugzeugkabinen sind ebenfalls aus US 3,672,766 bekannt.

Der vorliegenden Erfindung liegt somit die Aufgabe zugrunde, bei einer gattungsgemäßen Anordnung eine sichere und schnelle Notevakuierung zu ermöglichen, wobei die Quergänge zu diesem Zweck eine ausreichende Breite aufweisen sollen und gleichzeitig eine maximal mögliche Anzahl an Sitzplätzen für den Passagiertransport zur Verfügung gestellt werden soll.

Diese Aufgabe wird durch die im Patentanspruch 1 genannten Maßnahmen gelöst.

Dabei ist insbesondere vorteilhaft, dass mit der Anwendung der Erfindung die Breiten der Quergänge variabel gestaltet werden können. Somit ist es insbesondere für eine Notevakuierung der Passagiere aus dem Flugzeug von Vorteil, wenn sich die Breiten der Quergänge vergrößern und ein schnelleres Verlassen des Flugzeuges möglich wird, was die Sicherheit der Passagiere erhöht. Durch die Vergrößerung der Quergangbreite ist ebenfalls eine bessere Erkennbarkeit des Fluchtweges erreicht.

Die bisher notwendigen Quergangbreiten können reduziert werden, da im Notfall durch Verlassen der Sitze die Sitzteile hochschwenken und somit dann die notwendige Breite des Querganges zur Verfügung steht. Damit eröffnet sich die Möglichkeit einer Erhöhung der Sitzplatzanzahl.

Weiterbildungen und vorteilhafte Ausgestaltungen sind in den Ansprüchen 2 und 3 angegeben. Weitere Vorteile ergeben sich aus der nachfolgenden Detailbeschreibung.

In der Zeichnung sind Ausführungsbeispiele der Erfindung dargestellt, welche nachstehend anhand der Figuren 1 bis 4 näher beschrieben werden. In den Figuren sind gleiche Bauteile mit gleichen Bezugszeichen versehen.

Es zeigen:
- Fig. 1: eine Darstellung eines Kabinenlayouts eines Passagierflugzeuges,
- Fig. 2: eine vergrößerte Darstellung des Kabinenlayouts im Bereich von Notausgängen mit einer ersten erfindungsgemäßen Sitzreihenanordnung im Bereich von Quergängen,
- Fig. 3: eine vergrößerte Darstellung des Kabinenlayouts im Bereich von Notausgängen mit einer zweiten erfindungsgemäßen Sitzreihenanordnung im Bereich von Quergängen und
- Fig. 4: ein für die erfindungsgemäße Sitzreihenanordnung verwendbarer Klappsitz.

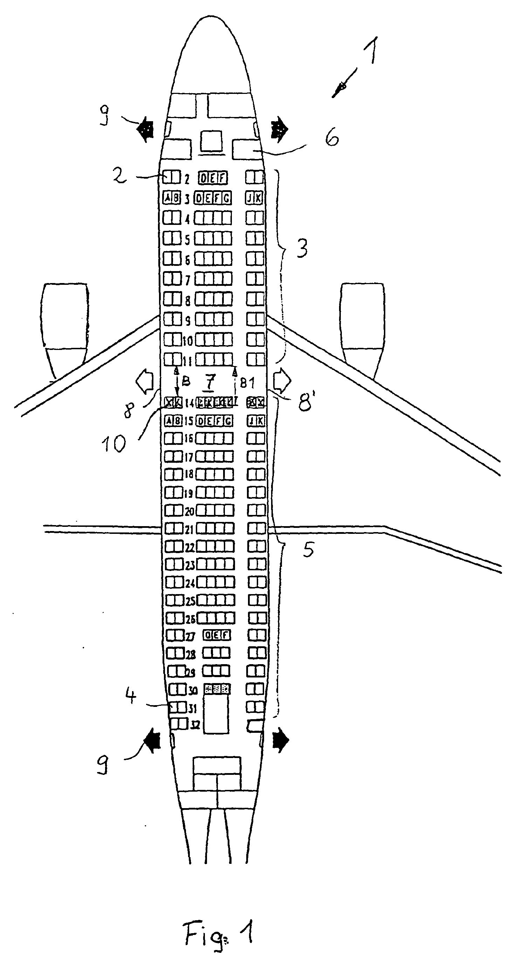

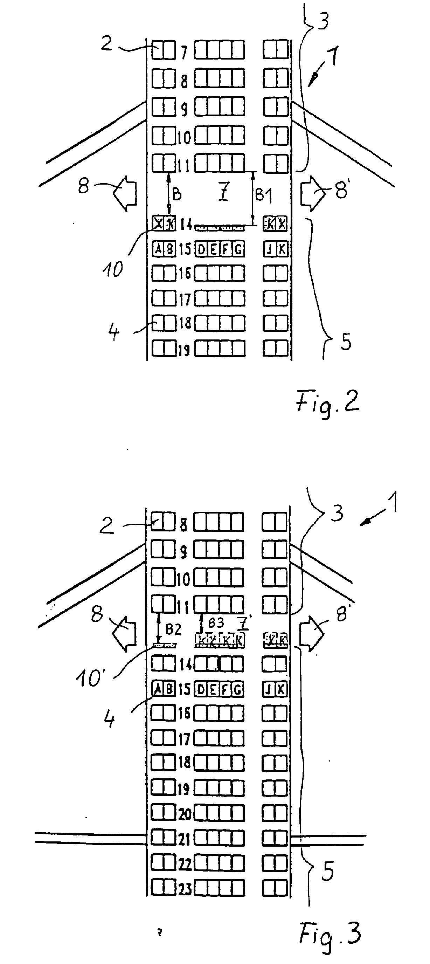

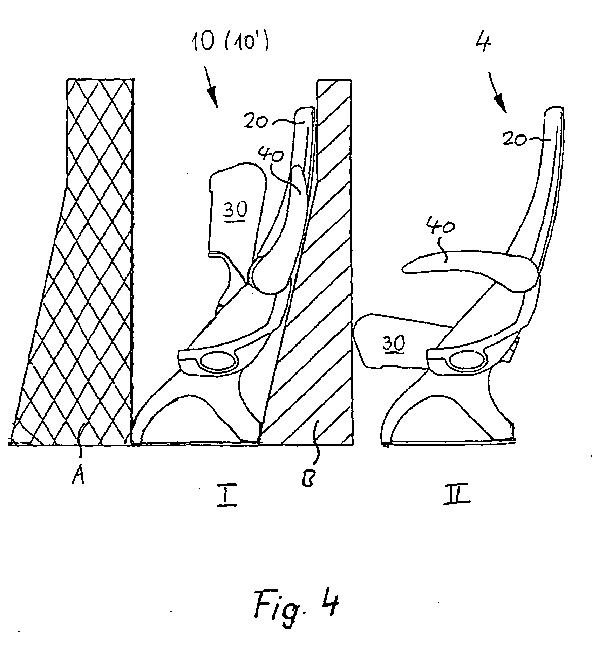

In der Fig. 1 ist ein Kabinenlayout eines Passagierflugzeuges gezeigt. Eine derartige Passagierkabine 1 weist im vorderen Bereich Sitzreihen 2 in einer Business Class 3 sowie im hinteren Bereich Sitzreihen 4 in einer Tourist Class 5 auf. Es ist ersichtlich, dass die Sitzabstände (in Flugzeuglängsrichtung) der Sitzreihen im Bereich der Business Class 3 größer sind als im Bereich der Tourist Class 5. Darüber hinaus ist ein Quergangbereich 7 gezeigt, der durch einen sehr weiten Sitzabstand gekennzeichnet ist und damit einen Zugang zu einem Notausgang 8 bzw. 8' (entsprechend der Flugzeugseite) bildet. Ein derartiger Quergang 7 muss ausreichend breit sein, um im Falle einer Notevakuierung einen schnellen Passagierstrom zum Notausgang 8 bzw. 8' zu gewährleisten. Ersichtlich ist eine Sitzreihe 10, die unmittelbar benachbart zum Quergang 7 angeordnet ist. Der Quergang 7 weist eine Breite B auf. Die Sitzreihe 10 ist erfindungsgemäß mit Klappsitzen 20 ausgestattet (siehe Fig. 4). In der dargestellten Position in Fig. 1 ist die Sitzreihe 10 mit Klappsitzen in heruntergeklappter Position ersichtlich. In einer vergrößerten Darstellung in Fig. 2 am Beispiel der Mittelsitzgruppe ist gezeigt, dass im Evakuierungsfall - wenn keine Personen mehr in dieser Sitzreihe 10 sitzen - die Sitzflächen sowie auch die Armlehnen hochgeklappt sind und damit eine Verbreiterung des Querganges 7 bis zu einer Breite B1 ermöglicht wird. Vorgesehen ist, dass sich im Evakuierungsfall keine Personen mehr sitzend auf der Sitzreihe 10 aufhalten und damit der gesamte Quergang 7 die Breite B1 aufweist. Eine derartige Vergrößerung des Bewegungsraumes für die Passagiere im Notfall kann wesentlich zu einer verbesserten und schnelleren Evakuierung beitragen, was die Sicherheit der Passagiere erhöht.

Auch ist es denkbar, im Bereich der Türen mit den normalen Ausgängen 9 Sitzreihen 10 mit Klappsitzen einzusetzen. Durch eine geschickte Kombination der Bereiche am Längsgang, an dem ebenfalls mindestens die gangseitigen Sitze der Sitzreihen mit Klappsitzen ausgestattet sein können, und den Bereichen am Quergang 7 ist eine weitere Verbesserung des Freiraums für die Passagiere erreicht.

In Fig. 3 ist in einer vergrößerten Darstellung des Kabinenlayouts im Bereich des Quergangs 7' eine zweite Ausführungsform der Sitzreihenanordnung gezeigt. Es ist erkennbar, dass eine zusätzliche Sitzreihe 10' in diesem Bereich angeordnet sein kann, wobei im hochgeklappten Zustand der verwendeten Klappsitze nur unwesentlich die Breite des Querganges 7' vermindert wird. Es steht die Breite B2 für den Fall einer Notevakuierung zur Verfügung, wenn die Passagiere ihre Sitze verlassen haben und die Sitze selbsttätig hochgeklappt sind. Wenn ein Zugang zu den Notausgängen 8 bzw. 8' nicht notwendig ist, werden die Sitze der Sitzreihe 10' heruntergeklappt (in der Mittelsitzreihe dargestellt) und der Quergang 7' vermindert seine Breite auf die Breite B3. Mit dieser Ausführungsform ist es möglich, zusätzliche Sitzkapazität im Passagierflugzeug zu schaffen.

In Fig. 4 ist in einer Seitenansicht eine Sitzreihe 10 bzw. 10' gezeigt, die erfindungsgemäß Passagierklappsitze 20 verwendet. Die Passagierklappsitze 20 können ausgebildet sein wie beispielsweise in DE 102 14 104.5-14 beschrieben.
Es ist ersichtlich, dass mit einem hochgeklappten Sitzteil 30 sowie hochgeklappten Armlehnen 40 ein größerer Freiraum A zur Verfügung steht als bei Sitzanordnungen ohne Klappmöglichkeit. Der zwischen hintereinander angeordneten Sitzreihen übliche Freiraum B ist zwischen der Sitzreihe 10 und der Sitzreihe 4 gezeigt. Eine Anwendung von Klappsitzen mindestens für die Sitzreihen 10 bzw. 10' im Bereich von Ausgängen bzw. Notausgängen ist somit vorteilhaft, um Platz zu gewinnen und bei einer Notevakuierung den Freiraum für die Passagiere zu erhöhen und/oder es möglich ist, die Sitzplatzkapazität innerhalb der Passagierkabine 1 zu erhöhen.

## Patentansprüche

1. Passagierkabine eines Verkehrsflugzeuges mit einer Sitizreihenanordnung mit hintereinander angeordneten Sitzreihen, wobei die Sitzreihen (2, 4) mit vorbestimmten Sitzabständen angeordnet sind und im Bereich von Notausgängen (8, 8') ein Quergang (7), gebildet durch einen vergrößerten Sitzabstand der Sitzreihen (2, 4), als Zugang zu den Notausgängen (8, 8') vorgesehen ist, wobei
mindestens eine Sitzreihe (10, 10') mit Passagiersitzen (20) mit jeweils hochklappbarem Sitzteil (30) ausgestattet ist, die Sitzreihe (10, 10') benachbart und mit dem Sitzteil (30) gerichtet zum Quergang (7) angeordnet ist, wobei der Quergang (7) bei heruntergeklapptem Sitzteil (30) eine erste Breite (B, B3) und bei hochgeklapptem Sitzteil (30) eine zweite, größere Breite (B1, B2) aufweist, und
die Breitenveränderung des Querganges (7) in eine größere Breite (B1, B2) für eine Notevakuierung der Passagiere vorgesehen ist.

2. Passagierkabine nach Anspruch 1, **dadurch gekennzeichnet, daß** die Passagiersitze (20) der Sitzreihe (10, 10') mit hochschwenkbaren Armlehnen (40) ausgestattet sind.

3. Passagierkabine nach einem der Ansprüche 1 oder 2, **dadurch gekennzeichnet, dass** die Breitenveränderung des Querganges (7) durch selbsttätig hochschwenkende Sitzteile (20) vorgesehen ist, wenn keine Benutzung des Sitzes (20) durch einen Passagier erfolgt.

## Claims

1. Passenger cabin of a commercial aircraft with a seat row arrangement with rows of seats arranged one behind the other, wherein the rows of seats (2, 4) are arranged at predetermined seat spacings and a transverse gangway (7), formed by an enlarged seat spacing of the rows of seats (2, 4), is provided in the area of emergency exits (8, 8') as access to the emergency exits (8, 8'), wherein at least one row of seats (10, 10') is equipped with passenger seats (20) in each case with a tip-up seat part (30), the row of seats (10, 10') is arranged adjacent to the transverse gangway (7) and with the seat part (30) directed towards the latter, wherein the transverse gangway (7) is of a first width (B, B3) when the seat part (30) is tipped down and of a second, greater width (B1, B2) when the seat part (30) is tipped up, and the width (B; B3) of the transverse gangway (7) can be changed into a greater width (B1; B2) by swinging up the corresponding seat part (20) and
the change in the width of the transverse gangway (7) into a greater width (B1, B2) is intended for emergency evacuation of the passengers.

2. Passenger cabin according to Claim 1, **characterised in that** the passenger seats (20) of the row of seats (10, 10') are equipped with swing-up arm rests (40).

3. Passenger cabin according to either of Claims 1 and 2, **characterised in that** the change in the width of the transverse gangway (7) is provided by seat parts (20) which swing up automatically when no passenger is using the seat.

## Revendications

1. Cabine à passagers d'un aéronef comportant un agencement de sièges avec des rangées de sièges disposées les unes derrière les autres,
les rangées de sièges (2, 4) étant disposées avec un espacement prédéterminé des sièges et un couloir transversal (7) obtenu par un espacement plus grand des rangées de sièges (2, 4) étant prévu dans la région des issues de secours (8, 8') pour l'accès aux issues de secours (8, 8'),
au moins une rangée de sièges (10, 10') étant équipée de sièges passagers (20) dont l'assise (30) est relevable, ladite rangée de sièges (10, 10') étant disposée dans le voisinage du couloir transversal (7) avec sa partie assise (30) tournée vers celui-ci,
le couloir transversal (7) présentant une première largeur (B, B3) lorsque la partie assise (30) est abaissée et une seconde largeur (B1, B2) lorsque la partie assise (30) est relevée et
la modification de la largeur du couloir transversal (7) vers une largeur plus grande (B1, B2) étant prévue pour une évacuation d'urgence des passagers.

2. Cabine à passagers selon la revendication 1, **caractérisée par le fait que** les sièges passagers (20) de la rangée de sièges (10, 10') sont équipés d'accoudoirs (40) relevables.

3. Cabine à passagers selon une des revendications 1 ou 2, **caractérisée par le fait qu'**il est prévu une modification de la largeur du couloir transversal (7) par des éléments de sièges (20) à relevage automatique, lorsque le siège (20) n'est pas utilisé par un passager.
